(19) Europäisches Patentamt
European Patent Office
Office européen des brevets

(11) **EP 3 632 702 B1**

(12) **EUROPEAN PATENT SPECIFICATION**

(45) Date of publication and mention
of the grant of the patent:
**07.04.2021 Bulletin 2021/14**

(51) Int Cl.:
**B60C 1/00** *(2006.01)*  **B60C 3/04** *(2006.01)*
**B60C 11/03** *(2006.01)*  **C08K 3/04** *(2006.01)*
**C08L 7/00** *(2006.01)*  **C08L 9/00** *(2006.01)*
**C08L 21/00** *(2006.01)*

(21) Application number: **19200011.5**

(22) Date of filing: **27.09.2019**

(54) **HEAVY-DUTY TIRE**

SCHWERLASTREIFEN

PNEU POUR FONCTIONNEMENT INTENSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2018 JP 2018187558**

(43) Date of publication of application:
**08.04.2020 Bulletin 2020/15**

(73) Proprietor: **Sumitomo Rubber Industries, Ltd.
Kobe-shi,
Hyogo-ken 651-0072 (JP)**

(72) Inventors:
• **KASAI, Yuki**
**Kobe-shi, Hyogo 651-0072 (JP)**
• **HIRO, Masataka**
**Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 0 949 303  EP-A1- 2 444 257**

**Description**

BACKGROUND OF THE INVENTION

Field of the Invention

The present invention relates to a heavy-duty tire.

Description of the Background Art

Heavy-duty tires used for trucks, buses, etc., are required to have desired tire total life and wear resistance from an environmental point of view, and, for example, improvements have been made in terms of tread pattern and blending formula.
For example, Japanese Laid-Open Patent Publication No. 2011-161988 proposes a heavy-duty tire having improved wet performance and uneven wear resistance. For example, when lateral force in the tire axial direction acts on such a tire during turning, uneven wear tends to occur due to lack of the stiffness of the crown land portions and the middle land portions of the tire. Thus, further improvement in uneven wear resistance is desired. Further a prior art heavy duty tire is disclosed in EP 2 444 257 A1.

SUMMARY OF THE INVENTION

The present invention has been made to solve the above-described problem, and an object of the present invention is to provide a heavy-duty tire having excellent uneven wear resistance.
The present invention is directed to a heavy-duty tire as defined in claim 1.
The rubber composition preferably contains 5 parts by mass or greater of the carbon black per 100 parts by mass of the rubber component.
According to the present invention, uneven wear resistance is significantly improved since the heavy-duty tire includes a tread portion having predetermined crown main grooves, predetermined shoulder main grooves, a predetermined crown land portion, predetermined middle land portions, predetermined shoulder land portions, and predetermined shoulder lateral grooves, the above formulas (1) to (3) are satisfied, and the tread portion is formed from a rubber composition containing an isoprene-based rubber and predetermined carbon black in predetermined blending amounts.

BRIEF DESCRIPTION OF THE DRAWINGS

FIG. 1 is an example of a development of a tread portion 2 of a tire 1 according to an embodiment of the present invention; and
FIG. 2 is an example of an enlarged view of a shoulder land portion 9 of the tread portion 2 in FIG. 1.

DESCRIPTION OF THE PREFERRED EMBODIMENTS

The present invention is a heavy-duty tire including a tread portion having a pair of crown main grooves continuously extending in a tire circumferential direction and provided at both sides of a tire equator, and a pair of shoulder main grooves provided between the crown main grooves and tread edges, wherein
the tread portion has one crown land portion demarcated between the crown main grooves, a pair of middle land portions demarcated by the crown main grooves and the shoulder main grooves, and a pair of shoulder land portions demarcated between the shoulder main grooves and the tread edges,
at least one of the shoulder land portions has shoulder lateral grooves extending in a tire axial direction,
a width Wc in the tire axial direction (mm) of the crown land portion, a width Wm in the tire axial direction (mm) of each middle land portion, and a width Ws in the tire axial direction (mm) of each shoulder land portion satisfy the above formula (1),
a maximum length Lsm in the tire axial direction (mm) of the shoulder lateral grooves and the width Ws in the tire axial direction (mm) of the shoulder land portion satisfy the above formula (2),
a total length Lst in the tire axial direction (mm) of the shoulder lateral grooves and a tire outer diameter H (mm) satisfy the above formula (3), and
the tread portion is formed from a rubber composition containing a rubber component containing 90% by mass or greater of an isoprene-based rubber, and predetermined carbon black.

When such a specific tread pattern is adopted and the tread portion is formed from a rubber composition having a specific blending formula, uneven wear resistance is significantly improved.

Hereinafter, an embodiment of the present invention will be described with reference to the drawings.

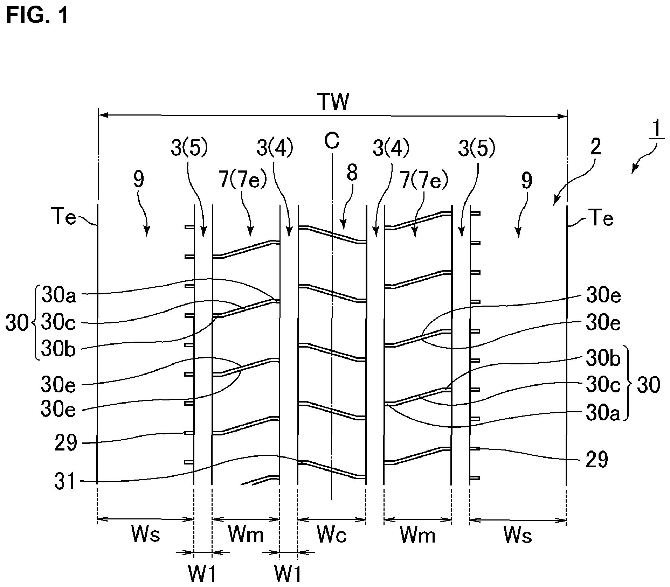

FIG. 1 is an example of a development of a tread portion 2 of a tire 1 according to the embodiment of the present invention. The present invention can be used, for example, for various tires such as a pneumatic tire and a non-pneumatic tire the interior of which is not filled with pressurized air. The tire 1 of the present embodiment is a heavy-duty pneumatic tire.

The tread portion 2 has a plurality of main grooves 3 continuously extending in the tire circumferential direction. In the present embodiment, the main grooves 3 include a pair of crown main grooves 4, 4 provided at both sides of a tire equator C, and a pair of shoulder main grooves 5, 5 provided between the crown main grooves 4 and tread edges Te.

The "tread edges" Te are defined as ground contact positions at the outermost side in the tire axial direction when a normal load is applied to the tire 1, in a normal state where the tire 1 is mounted to a normal rim and inflated to a normal internal pressure and no load is applied to the tire 1, such that the tire 1 is brought into contact with a plane at a camber angle of 0 degrees. In the normal state, the distance in the tire axial direction between both tread edges Te, Te is defined as a tread width TW. Unless otherwise specified, dimensions of components of the tire and the like are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the "maximum value" indicated in the table "TIRE LOAD LIMITS AT VARIOUS COLD INFLATION PRESSURES" in the TRA standard, or the "LOAD CAPACITY" in the ETRTO standard.

The crown main grooves 4 and the shoulder main grooves 5 continuously extend straight in the tire circumferential direction. During running on a wet road surface, such main grooves 3 effectively drain water within the main grooves 3 rearward in the running direction, and thus exhibit excellent wet performance. A groove width W1 of each main groove 3 (the crown main grooves 4 and the shoulder main grooves 5) is preferably, for example, 2 to 8% of the tread width TW.

The tread portion 2 has a pair of middle land portions 7, 7 demarcated by the crown main grooves 4 and the shoulder main grooves 5, one crown land portion 8 demarcated between the crown main grooves 4, 4, and a pair of shoulder land portions 9, 9 demarcated between the shoulder main grooves 5 and the tread edges Te.

Each middle land portion 7 has middle lateral grooves 30 connecting the crown main groove 4 and the shoulder main groove 5. Such middle lateral grooves 30 smoothly drain a water film on a tread surface 7e of the middle land portion 7 to the crown main groove 4 and the shoulder main groove 5.

In this embodiment, each middle lateral groove 30 includes a first portion 30a extending from the crown main groove 4 outward in the tire axial direction, a second portion 30b extending from the shoulder main groove 5 inward in the tire axial direction, and a third portion 30c connecting the first portion 30a and the second portion 30b. The third portion 30c is tilted at an angle larger than the angles of the first portion 30a and the second portion 30b relative to the tire axial direction. Such a third portion 30c has groove edges 30e each having a component in the tire axial direction and a component in the tire circumferential direction, and thus improves wet performance. In addition, the first portion 30a and the second portion 30b maintain high stiffness in the tire circumferential direction of the middle land portion 7.

The crown land portion 8 has crown lateral grooves 31 connecting the crown main grooves 4, 4 at both sides of the tire equator C. In the present embodiment, the crown lateral grooves 31 are provided so as to be tilted in a direction opposite to that of the middle lateral grooves 30.

The shoulder land portions 9 have a plurality of shoulder lateral grooves 29 that communicate with the shoulder main groove 5, terminate within the shoulder land portion 9, and extend along the tire axial direction. The shoulder lateral grooves 29 may be provided on one or each of the shoulder land portions 9, which are provided at the outermost side in the tire axial direction. In the present specification, the term "groove" is defined as a groove-like recess having a groove width of not less than 2 mm.

A width Wc in the tire axial direction (mm) of the crown land portion 8, a width Wm in the tire axial direction (mm) of each middle land portion 7, and a width Ws in the tire axial direction (mm) of each shoulder land portion 9 satisfy the following formula (1).

$$Wc{:}Wm{:}Ws = 1.00{:}0.80 \text{ to } 1.20{:}1.10 \text{ to } 1.60 \qquad (1)$$

When formula (1) is satisfied, uneven wear resistance is improved.

Wc:Wm:Ws is preferably 1.00:0.80 to 1.20:1.30 to 1.60, and more preferably 1.00:0.90 to 1.10:1.35 to 1.50.

Here, the widths in the tire axial direction of the crown land portion, each middle land portion, and each shoulder land portion are the projection lengths in the tire axial direction of the crown land portion, each middle land portion, and each shoulder land portion, respectively, and are Wc, Wm, and Ws in FIG. 1, respectively.

A maximum length Lsm in the tire axial direction (mm) of the shoulder lateral grooves 29 and the width Ws in the tire axial direction (mm) of the shoulder land portion 9 satisfy the following formula (2).

$$0 < Lsm/Ws \leq 0.15 \qquad (2)$$

When formula (2) is satisfied, uneven wear resistance is improved.

Preferably, $0.05 \leq Lsm/Ws \leq 0.09$ is satisfied.

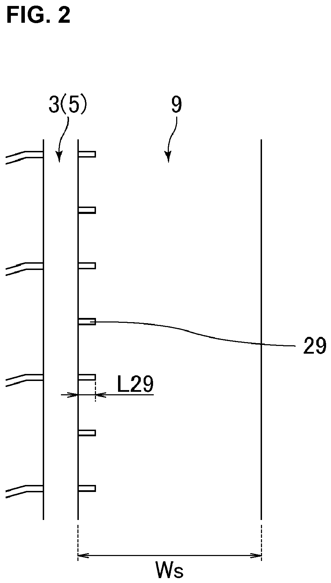

FIG. 2 shows an enlarged view of the shoulder land portion 9 of the tread portion 2 in FIG. 1. As shown in FIG. 2, the plurality of shoulder lateral grooves 29 are provided on the shoulder land portion 9. Here, the length in the tire axial direction of each shoulder lateral groove is the projection length in the tire axial direction of each shoulder lateral groove, and is L29 for the shoulder lateral groove 29 in FIG. 2. The maximum length Lsm in the tire axial direction of the shoulder lateral grooves refers to the maximum length among the lengths in the tire axial direction of the respective shoulder lateral grooves.

A total length Lst in the tire axial direction (mm) of the shoulder lateral grooves 29 and a tire outer diameter H (mm) satisfy the following formula (3).

$$0 < Lst/H \leq 2.30 \qquad (3)$$

When formula (3) is satisfied, uneven wear resistance is improved.

$0.80 \leq Lst/H \leq 2.00$ is preferably satisfied, $0.90 \leq Lst/H \leq 1.40$ is more preferably satisfied, and $1.00 \leq Lst/H \leq 1.30$ is further preferably satisfied.

Here, as described above, the length in the tire axial direction of each shoulder lateral groove is the projection length in the tire axial direction of each shoulder lateral groove. The total length Lst in the tire axial direction of the shoulder lateral grooves is the total length (sum) of the lengths in the tire axial direction of the respective shoulder lateral grooves provided in the tread surface, and is the sum of the lengths in the tire axial direction of the respective shoulder lateral grooves such as L29 in FIG. 2. The tire outer diameter H is the maximum outer diameter in the normal state when the tire is mounted to the normal rim and inflated to the normal internal pressure and no load is applied to the tire.

A rubber composition that forms the tread portion 2 (the middle land portions 7, the crown land portion 8, the shoulder land portions 9, etc.) contains a rubber component containing 90% by mass or greater of an isoprene-based rubber. From the viewpoint of uneven wear resistance, the amount of the isoprene-based rubber in 100% by mass of the rubber component is not less than 90% by mass, but preferably not less than 95% by mass and more preferably 100% by mass.

The isoprene-based rubber is not particularly limited as long as the isoprene-based rubber is a polymer having an isoprene-based unit as a main unit, and examples of the isoprene-based rubber include isoprene rubber (IR), epoxidized isoprene rubber, hydrogenated isoprene rubber, grafted isoprene rubber, natural rubber (NR), deproteinized natural rubber (DPNR), ultrapure natural rubber (UPNR), epoxidized natural rubber (ENR), hydrogenated natural rubber (HNR), and grafted natural rubber. These rubbers may be used individually, or two or more of these rubbers may be used in combination.

Examples of a rubber component that can be blended, other than the isoprene-based rubber, include diene-based rubbers such as butadiene rubber (BR), styrene-butadiene rubber (SBR), styrene-isoprene-butadiene rubber (SIBR), ethylene-propylene-diene rubber (EPDM), chloroprene rubber (CR), acrylonitrile butadiene rubber (NBR), and isobutylene-isoprene-rubber (IIR). The rubber components may be used individually, or two or more of rubber components may be used in combination. For example, BR and SBR are preferable.

The SBR is not particularly limited, and, for example, an emulsion-polymerized styrene-butadiene rubber (E-SBR), a solution-polymerized styrene-butadiene rubber (S-SBR), and the like can be used. One of these styrene-butadiene rubbers may be used, or two or more of these styrene-butadiene rubbers may be used in combination.

The SBR may be either an unmodified SBR or a modified SBR.

The modified SBR only needs to be an SBR having a functional group that interacts with a filler such as silica, and examples of such a modified SBR include an end-modified SBR obtained by modifying at least one end of an SBR with a compound (modifier) having the functional group (an end-modified SBR having the functional group at an end thereof), a main chain-modified SBR having the functional group in the main chain thereof, a main chain/end-modified SBR having the functional group in the main chain and at an end thereof (for example, a main chain/end-modified SBR that has the functional group in the main chain thereof and in which at least one end thereof is modified with the modifier), and an end-modified SBR that is modified (coupled) by using a multifunctional compound having two or more epoxy groups in the molecule thereof and to which a hydroxyl group or an epoxy group is introduced.

Examples of the above functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), an alkoxysilyl group (preferably, an alkoxysilyl group having 1 to 6 carbon atoms), and an amide group, are preferable.

Examples of the modifier used for the modified SBR include: polyglycidyl ethers ofpolyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl] sulfide, (trimethylsilyl) [3 -(triethoxysilyl)propyl] sulfide, (trimethylsilyl)[3-(tripropoxysilyl)propyl]sulfide, (trimethylsilyl)[3-(tributoxysilyl)propyl]sulfide, (trimethylsilyl)[3 -(methyldimethoxysilyl)propyl] sulfide, (trimethylsilyl) [3 - (methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-co-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone.

Modification with the above compounds (modifiers) can be carried out by a known method.

As the SBR, for example, SBRs manufactured by and available from Sumitomo Chemical Co., Ltd., JSR Corporation, Asahi Kasei Corporation, Zeon Corporation, etc., can be used.

The BR is not particularly limited, and a BR having a high cis content, a BR having a low cis content, a BR containing syndiotactic polybutadiene crystal, etc., can be used. These BRs may be used individually, or two or more of these BRs may be used in combination.

The cis content of the BR is preferably not less than 90% by mass, more preferably not less than 95% by mass, and further preferably not less than 98% by mass. The upper limit of the cis content is not particularly limited. If the cis content falls within the above range, the effect tends to be more favorably achieved.

The cis content of the BR can be measured by infrared absorption spectrometry.

The BR may be either an unmodified BR or a modified BR. Examples of the modified BR include a modified BR into which the aforementioned functional group is introduced.

As the BR, for example, products of Ube Industries, Ltd., JSR Corporation, Asahi Kasei Corporation, Zeon Corporation, etc., can be used.

The rubber composition contains carbon black having an average particle diameter of not greater than 20 nm and/or a cetyltrimethylammonium bromide adsorption specific surface area (CTAB) of not less than 130 $m^2/g$ (also referred to as carbon black (A)).

From the viewpoint of uneven wear resistance, the average particle diameter of the carbon black (A) is preferably not greater than 17 nm and more preferably not greater than 15 nm. The lower limit of the average particle diameter is not particularly limited, but, from the viewpoint of dispersibility and the like, the average particle diameter is preferably not less than 5 nm and more preferably not less than 10 nm.

The average particle diameter of the carbon black is a number average particle diameter and is measured with a transmission electron microscope.

From the viewpoint of uneven wear resistance, the CTAB of the carbon black (A) is preferably not less than 140 $m^2/g$, more preferably not less than 145 $m^2/g$, and further preferably not less than 150 $m^2/g$. The upper limit of the CTAB is not particularly limited, but, from the viewpoint of dispersibility and the like, the CTAB is preferably not greater than 250 $m^2/g$, more preferably not greater than 200 $m^2/g$, and further preferably not greater than 180 $m^2/g$.

In the present specification, the CTAB of the carbon black is a value measured according to JIS K6217-3: 2001.

From the viewpoint of uneven wear resistance, the nitrogen adsorption specific surface area ($N_2SA$) of the carbon black (A) is preferably not less than 125 $m^2/g$, more preferably not less than 145 $m^2/g$, further preferably not less than 150 $m^2/g$, and particularly preferably not less than 155 $m^2/g$. The upper limit of the $N_2SA$ is not particularly limited, but, from the viewpoint of dispersibility and the like, the $N_2SA$ is preferably not greater than 250 $m^2/g$, more preferably not greater than 200 $m^2/g$, and further preferably not greater than 180 $m^2/g$.

The $N_2SA$ of the carbon black is obtained according to JIS K6217-2: 2001.

From the viewpoint of uneven wear resistance, the iodine adsorption amount (IA) (mg/g) of the carbon black (A) is preferably not less than 120 mg/g, more preferably not less than 125 mg/g, further preferably not less than 130 mg/g, and particularly preferably not less than 140 mg/g. The upper limit of the iodine adsorption amount (IA) is not particularly limited, but, from the viewpoint of dispersibility and the like, the iodine adsorption amount (IA) is preferably not greater than 200 mg/g, more preferably not greater than 180 mg/g, and further preferably not greater than 160 mg/g.

From the viewpoint of uneven wear resistance, the ratio (CTAB/IA) of the cetyltrimethylammonium bromide adsorption specific surface area (CTAB) to the iodine adsorption amount (IA) (mg/g) of the carbon black (A) is preferably 0.85 to 1.35 $m^2/mg$, more preferably 0.92 to 1.30 $m^2/mg$, and further preferably 1.00 to 1.25 $m^2/mg$.

In the present specification, the iodine adsorption amount (IA) of the carbon black is a value measured according to JIS K6217-1: 2001.

A surface activity index represented by CTAB/IA can be considered as an index of the crystallinity (graphitization rate) of the carbon black. That is, higher CTAB/IA indicates that crystallization is less advanced, and the interaction between the carbon black and the rubber component tends to increase. In addition, CTAB/IA is also positioned as a parameter for evaluating the amount of acidic functional groups present on the surface of the carbon black. The acidic functional groups present on the surface of the carbon black contribute to the interaction with the rubber component, and higher CTAB/IA indicates that a larger number of acidic functional groups are present on the surface of the carbon black. Therefore, if the CTAB/IA is within the above range, a more significant reinforcing effect can be exerted on the rubber component, and excellent uneven wear resistance is achieved.

From the viewpoint of uneven wear resistance, the dibutyl phthalate absorption amount (DBP) of the carbon black (A) is preferably not less than 120 $cm^3/100$ g, more preferably not less than 125 $cm^3/100$ g, and further preferably not less than 135 $cm^3/100$ g. The upper limit of the DBP is not particularly limited, but, from the viewpoint of dispersibility and the like, the DBP is preferably not greater than 180 $cm^3/100$ g, more preferably not greater than 170 $cm^3/100$ g, and further preferably not greater than 160 $cm^3/100$ g.

The DBP of the carbon black is measured according to JIS K 6217-4: 2001.

Examples of the carbon black (A) include SAF, etc. These carbon blacks may be used individually, or two or more of these carbon blacks may be used in combination. In addition, the carbon black (A) can be produced by the production methods described in Japanese Laid-Open Patent Publication No. 2000-319539, Japanese Laid-Open Patent Publication (translation of PCT application) No. H8-507555, etc.

From the viewpoint of uneven wear resistance, the amount of the carbon black (A) in the rubber composition per 100 parts by mass of the rubber component is preferably not less than 5 parts by mass, more preferably not less than 10 parts by mass, further preferably not less than 20 parts by mass, and particularly preferably not less than 40 parts by mass. From the viewpoint of dispersibility and the like, this amount is preferably not greater than 100 parts by mass, more preferably not greater than 70 parts by mass, and further preferably not greater than 60 parts by mass.

Other carbon black may be blended in the rubber composition together with the carbon black (A).

From the viewpoint of uneven wear resistance, the amount of the carbon black (A) in 100% by mass of the carbon black is preferably not less than 25% by mass, more preferably not less than 35% by mass, further preferably not less than 50% by mass, and particularly preferably not less than 80% by mass.

From the viewpoint of uneven wear resistance, the total amount of the carbon black (the total amount of the carbon black (A) and other carbon black blended as necessary) per 100 parts by mass of the rubber component is preferably not less than 10 parts by mass, more preferably not less than 20 parts by mass, further preferably not less than 30 parts by mass, and particularly preferably not less than 40 parts by mass. From the viewpoint of dispersibility and the like, this amount is preferably not greater than 120 parts by mass, more preferably not greater than 100 parts by mass, further preferably not greater than 70 parts by mass, and particularly preferably not greater than 60 parts by mass.

In addition to the carbon black, a reinforcing filler that is generally used in production of a rubber composition, for example, silica, clay, talc, or the like, may be blended as appropriate in the rubber composition. From the viewpoint of uneven wear resistance, the amount of the carbon black in 100% by mass of the reinforcing filler is preferably not less than 50% by mass, more preferably not less than 65% by mass, and further preferably not less than 75% by mass. The upper limit of the amount is not particularly limited, but the amount is preferably not greater than 98% by mass, more preferably not greater than 95% by mass, and further preferably not greater than 90% by mass.

As usable carbon black, for example, commercially available products of Mitsubishi Chemical Corporation, Lion Corporation, NSCC Carbon Co., Ltd., Columbia Carbon Co., Cabot Japan K.K., etc., can be used. These carbon blacks may be used individually, or two or more of these carbon blacks may be used in combination.

Silica may be blended in the rubber composition.

From the viewpoint of grip performance, the amount of the silica in the rubber composition per 100 parts by mass of the rubber component is preferably not less than 3.0 parts by mass and more preferably not less than 5.0 parts by mass. This amount is preferably not greater than 30 parts by mass, more preferably not greater than 20 parts by mass, and further preferably not greater than 15 parts by mass.

The nitrogen adsorption specific surface area ($N_2SA$) of the silica is preferably not less than 80 $m^2/g$, more preferably not less than 115 $m^2/g$, and further preferably not less than 150 $m^2/g$. When the $N_2SA$ is set to be not less than the lower limit, good grip performance tends to be achieved. In addition, the $N_2SA$ is preferably not greater than 400 $m^2/g$, more preferably not greater than 270 $m^2/g$, and further preferably not greater than 250 $m^2/g$. When the $N_2SA$ is set to be not greater than the upper limit, good silica dispersibility tends to be achieved.

The $N_2SA$ of the silica is a value measured by the BET method according to ASTM D3037-93.

The silica is not particularly limited, and, for example, dry-process silica (anhydrous silica), wet-process silica (hydrous silica), etc., can be used, but wet-process silica is preferable for the reason that it has a higher silanol group content. As commercially available products, products of Degussa, Rhodia, Tosoh Silica Corporation, Solvay Japan, Ltd., Tokuyama Corporation, etc., can be used. One of these types of silica may be used individually, or two or more thereof may be used in combination.

In the rubber composition, another filler other than the carbon black and the silica may be blended. Examples of the other filler include calcium carbonate, talc, alumina, clay, aluminum hydroxide, and mica.

In the case where the rubber composition contains silica, the rubber composition preferably contains a silane coupling agent together with the silica.

As the silane coupling agent, any silane coupling agent that is conventionally used in combination with silica in the rubber industry can be used. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3 -trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3 -triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used individually, or two or more of these silane coupling agents may be used in combination. Among them, sulfide silane coupling agents and mercapto silane coupling agents are preferable.

In the case where the rubber composition contains a silane coupling agent, the amount of the silane coupling agent per 100 parts by mass of the silica is preferably not less than 2 parts by mass and more preferably not less than 5 parts by mass. When the amount is set to be not less than the lower limit, the effect to be achieved by blending the silane coupling agent tends to be obtained. In addition, the amount is preferably not greater than 20 parts by mass and more preferably not greater than 15 parts by mass. When the amount is set to be not greater than the upper limit, an effect corresponding to the blending amount is achieved, and good processability at the time of kneading tends to be achieved.

In the rubber composition, a softener (a softener in liquid form at normal temperature (25°C)) such as an oil and a liquid diene-based polymer may be blended.

Examples of the oil include process oils such as paraffinic, aromatic, and naphthenic process oils.

The liquid diene-based polymer has a weight-average molecular weight (Mw) of preferably $1.0\times10^3$ to $2.0\times10^5$ and more preferably $3.0\times10^3$ to $1.5\times10^4$, the weight-average molecular weight (Mw) being measured by gel permeation chromatography (GPC) in terms of polystyrene. When the Mw is set to be not less than the lower limit, good wear resistance and fracture properties are achieved, and sufficient durability tends to be able to be ensured. Meanwhile, when the Mw is set to be not greater than the upper limit, a polymerization solution has good viscosity, and excellent productivity tends be achieved.

In the present invention, the Mw of the liquid diene-based polymer is a value that is measured by gel permeation chromatography (GPC) and obtained by polystyrene conversion.

Examples of the liquid diene-based polymer include liquid styrene-butadiene copolymers (liquid SBRs), liquid butadiene polymers (liquid BRs), liquid isoprene polymers (liquid IRs), liquid styrene-isoprene copolymers (liquid SIRs), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers. The ends and the main chains of these polymers may be modified by polar groups. Among them, liquid IRs and liquid SBRs are preferable.

In the rubber composition, the amount of the softener (softener total amount) per 100 parts by mass of the rubber component is preferably 1 to 100 parts by mass and more preferably 5 to 50 parts by mass. In the present specification, the amount of the softener also includes the amount of oil included in oil-extended rubber.

In the rubber composition, a resin in solid form at normal temperature (25°C) may be blended. The amount of the resin per 100 parts by mass of the rubber component is preferably 3 to 50 parts by mass and more preferably 7 to 40 parts by mass.

Examples of the resin include aromatic vinyl polymers, coumarone-indene resins, indene resins, rosin-based resins, terpene-based resins, and acrylic-based resins. As commercially available products, products of Maruzen Petrochemical Co., Ltd., Sumitomo Bakelite Co., Ltd., YASUHARA CHEMICAL CO., LTD, Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., etc., can be used. These resins may be used individually, or two or more of these resins may be used in combination. Among them, aromatic vinyl polymers, coumarone-indene resins, terpene-based resins, and rosin-based resins are preferable.

The above aromatic vinyl polymers may be resins obtained by polymerizing $\alpha$-methylstyrene and/or styrene, and examples of such a resin include styrene homopolymers, $\alpha$-methylstyrene homopolymers, and copolymers of $\alpha$-methylstyrene and styrene. Among them, copolymers of $\alpha$-methylstyrene and styrene are preferable.

The above coumarone-indene resins refer to resins that contain coumarone and indene as main monomer components that form the backbone (main chain) of the resins. Examples of the monomer components included in the backbone other than coumarone and indene include styrene, $\alpha$-methylstyrene, methylindene, and vinyltoluene.

The above indene resins refer to resins that contain indene as a main monomer component that forms the backbone (main chain) of the resins.

The above rosin-based resins (rosins) can be classified depending on whether the rosins are modified or not, that is, can be classified into non-modified rosins (unmodified rosins) and modified rosin products (rosin derivatives). Examples of non-modified rosins include tall rosin (also called tall oil rosin), gum rosin, wood rosin, disproportionated rosins, polymerized rosins, hydrogenated rosins, and other chemically modified rosins. Modified rosins are obtained by modifying non-modified rosins, and examples of modified rosin products include rosin esters, unsaturated carboxylic acid-modified rosins, unsaturated carboxylic acid-modified rosin esters, amide compounds of rosins, and amine salts of rosins.

The rosin-based resins preferably have a carboxyl group content not excessively high and preferably have an appropriate acid value. Specifically, the acid values of rosin-based resins ordinarily exceed 0 mg KOH/g, e.g., and is, for example, not greater than 200 mg KOH/g, preferably not greater than 100 mg KOH/g, more preferably not greater than 30 mg KOH/g, and further preferably not greater than 10 mg KOH/g.

The acid values can be measured in accordance with Examples described later. When, for example, a rosin has an excessively high acid value, the acid value can be adjusted to fall within the above range by reducing the carboxyl groups of the rosin through known esterification treatment.

As the above terpene-based resins, a polyterpene resin obtained by polymerizing a terpene compound, an aromatic modified terpene resin obtained by polymerizing a terpene compound and an aromatic compound, etc., can be used. Moreover, hydrogenated products of these resins can also be used.

The above polyterpene resin is a resin that is obtained by polymerizing a terpene compound. The terpene compound is a hydrocarbon represented by a composition $(C_5H_8)_n$ and an oxygenated derivative thereof, and is a compound having, as the basic backbone, a terpene classified into monoterpene $(C_{10}H_{16})$, sesquiterpene $(C_{15}H_{24})$, diterpene $(C_{20}H_{32})$, and the like. Examples of the terpene compound include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the above polyterpene resins include pinene resins, limonene resins, dipentene resins, and pinene-limonene resins which are formed from the above-described terpene compounds. Among them, pinene resins are preferable since a polymerization reaction is easy and since natural pine resin is a raw material and thus the cost is low. In general, pinene resins contain both α-pinene and β-pinene, which are isomeric with each other. Depending on contained components, pinene resins are classified into β-pinene resins containing β-pinene as a main component, and α-pinene resins containing α-pinene as a main component.

Examples of the above aromatic modified terpene resin include terpene-phenol resins formed from the above terpene compounds and phenol-based compounds, and terpene-styrene resins formed from the above terpene compounds and styrene-based compounds. Moreover, terpene-phenol-styrene resins formed from the above terpene compounds, phenol-based compounds, and styrene-based compounds can also be used. Examples of phenol-based compounds include phenol, bisphenol A, cresol, and xylenol. Examples of styrene-based compounds include styrene and α-methylstyrene.

The rubber composition preferably contains sulfur (sulfur vulcanization agent).

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

The amount of the sulfur (sulfur vulcanization agent) per 100 parts by mass of the rubber component is preferably not less than 0.3 parts by mass, more preferably not less than 0.5 parts by mass, and further preferably not less than 0.8 parts by mass. When the amount is set to be not less than the lower limit, good uneven wear resistance tends to be achieved. The upper limit of the amount is not particularly limited, but the amount is preferably not greater than 5.0 parts by mass, more preferably not greater than 3.0 parts by mass, and further preferably not greater than 2.5 parts by mass.

The rubber composition preferably contains a vulcanization accelerator.

Examples of the vulcanization accelerator include: thiazole-based vulcanization accelerators such as 2-mercaptobenzothiazole, di-2-benzothiazolyl disulfide (DM (2,2'-dibenzothiazolyl disulfide)), and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide-based vulcanization accelerators and guanidine-based vulcanization accelerators are preferable.

From the viewpoint of vulcanization characteristics and the like, the amount of the vulcanization accelerator per 100 parts by mass of the rubber component is preferably not less than 0.5 parts by mass, more preferably not less than 1.0 part by mass, and further preferably not less than 1.3 parts by mass. In addition, the amount is preferably not greater than 8.0 parts by mass, more preferably not greater than 5.0 parts by mass, and further preferably not greater than 3.0 parts by mass.

The rubber composition may contain a wax. The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. As commercially available products, products of Ouchi Shinko Chemical Industrial Co., Ltd., NIPPON SEIRO CO., LTD., Seiko Chemical Co., Ltd., etc., can be used. These waxes may be used individually, or two or more of these waxes may be used in combination. Among them, petroleum waxes are preferable, and paraffin wax is more preferable.

The amount of the wax per 100 parts by mass of the rubber component is preferably not less than 0.5 parts by mass and more preferably not less than 1 part by mass. Meanwhile, the amount is preferably not greater than 10 parts by mass and more preferably not greater than 6 parts by mass.

The rubber composition may contain an antioxidant.

The antioxidant is not particularly limited, and examples of the antioxidant include: naphthylamine antioxidants such as phenyl-$\alpha$-naphthylamine; diphenylamine antioxidants such as octylated diphenylamine and 4,4'-bis($\alpha,\alpha$'-dimethylbenzyl)diphenylamine; p-phenylenediamine antioxidants such as N-isopropyl-N'-phenyl-p-phenylenediamine, N-(1,3-dimethylbutyl)-N' -phenyl-p-phenylenediamine, and N,N' -di-2-naphthyl-p-phenylenediamine; quinoline antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. As commercially available products, products of Seiko Chemical Co., Ltd., Sumitomo Chemical Co., Ltd., Ouchi Shinko Chemical Industrial Co., Ltd., Flexsys, etc., can be used. These antioxidants may be used individually, or two or more of these antioxidants may be used in combination. Among them, p-phenylenediamine antioxidants (more preferably N-(1,3-dimethylbutyl)-N'-phenyl-p-phenylenediamine) are preferable.

The amount of the antioxidant per 100 parts by mass of the rubber component is preferably not less than 0.3 parts by mass, more preferably not less than 1 part by mass, further preferably not less than 1.5 parts by mass, and particularly preferably not less than 2.5 parts by mass. In addition, the amount is preferably not greater than 7 parts by mass, more preferably not greater than 6 parts by mass, further preferably not greater than 5 parts by mass, and particularly preferably not greater than 4 parts by mass.

The rubber composition may contain a fatty acid, particularly stearic acid.

As the stearic acid, conventionally known stearic acids can be used. For example, products of NOF Corporation, Kao Corporation, FUJIFILM Wako Pure Chemical Corporation, New Japan Chemical Co., Ltd., etc., can be used.

The amount of the fatty acid per 100 parts by mass of the rubber component is preferably not less than 0.5 parts by mass and more preferably not less than 1 part by mass. Meanwhile, the amount is preferably not greater than 10 parts by mass and more preferably not greater than 5 parts by mass.

The rubber composition may contain zinc oxide.

As the zinc oxide, conventionally known zinc oxides can be used. For example, products of Mitsui Mining & Smelting Co., Ltd., Toho Zinc Co., Ltd., HAKUSUI TECH CO., LTD., SEIDO CHEMICAL INDUSTRY CO., LTD., Sakai Chemical Industry Co., Ltd., etc., can be used.

The amount of the zinc oxide per 100 parts by mass of the rubber component is preferably not less than 0.5 parts by mass and more preferably not less than 1 part by mass. Meanwhile, the amount is preferably not greater than 5 parts by mass and more preferably not greater than 4 parts by mass.

In addition to the aforementioned components, additives that are generally used in the tire industry can be blended in the rubber composition, and examples of the additives include surfactants.

As a method for producing the rubber composition, a known method can be used. For example, the rubber composition can be produced by a method in which the components are kneaded by using a rubber kneading device such as an open roll, a Banbury mixer, or a kneader, and then vulcanization is performed.

As for the kneading conditions, in a base kneading step of kneading the additives other than a cross-linking agent (vulcanizing agent) and the vulcanization accelerator, the kneading temperature is normally 100 to 180°C and preferably 120 to 170°C. In a finish kneading step of kneading the vulcanizing agent and the vulcanization accelerator, the kneading temperature is normally not higher than 120°C and preferably 85 to 110°C. In addition, a composition obtained by kneading the vulcanizing agent and the vulcanization accelerator is normally subjected to vulcanization processing such as press vulcanization. The vulcanization temperature is normally 140 to 190°C and preferably 150 to 185°C.

The heavy-duty tire according to the present invention is produced by a general method using the above rubber composition. Specifically, the rubber composition obtained by blending the above components is extruded in an unvulcanized state so as to correspond to the shape of, for example, a tread (a member, which is brought into contact with a road surface, such as a single-layer tread or a cap tread of a multilayer tread), and is formed together with other tire members on a tire forming machine by a general method, thereby forming an unvulcanized tire. The unvulcanized tire is heated and pressurized in a vulcanizing machine, thereby obtaining the tire. The tire can be used for trucks, buses, etc.

EXAMPLES

The present invention will be specifically described by means of examples, but the present invention is not limited to these examples.

(Production Example 1)

Carbon black 1 was produced under each condition, using C fuel oil as fuel and creosote oil as raw material hydrocarbon, with use of a carbon black reactor in which a combustion zone with an inner diameter of 800 mm and a length of 1600 mm provided with an air introduction duct and a combustion burner, a raw material introduction zone connected from the combustion zone and composed of a narrow diameter portion with an inner diameter of 145 mm and a length of 1000 mm to which a material nozzle is connected by penetration from the periphery thereof, and a rear reaction zone with an inner diameter of 400 mm and a length of 3000 mm provided with a quenching device are sequentially joined.

(Production Example 2)

Carbon black 3 was produced by the production method of Example 3 in Japanese Laid-Open Patent Publication (translation of PCT application) No. H8-507555.

Various chemicals used in examples and comparative examples are collectively described below.

NR (natural rubber): TSR20

BR: BR150B (cis content: 98% by mass) manufactured by Ube Industries, Ltd.

Carbon black 1: Production Example 1 (average particle diameter: 16 nm, CTAB: 158 m$^2$/g, N$_2$SA: 170 m$^2$/g, IA: 145 mg/g, CTAB/IA: 1.09, DBP: 138 cm$^3$/100 g)

Carbon black 2: N220 (average particle diameter: 22 nm, CTAB: 115 m$^2$/g, N$_2$SA: 115 m$^2$/g, IA: 118 mg/g, CTAB/IA: 0.97, DBP: 113 cm$^3$/100 g)

Carbon black 3: Production Example 2 (average particle diameter: 16 nm, CTAB: 170 m$^2$/g, N$_2$SA: 174 m$^2$/g, IA: 163 mg/g, CTAB/IA: 1.04, DBP: 154 cm$^3$/100 g)

Carbon black 4: N134 (average particle diameter: 18 nm, CTAB: 130 m$^2$/g, N$_2$SA: 148 m$^2$/g, IA: 144 mg/g, CTAB/IA: 0.90, DBP: 123 cm$^3$/100 g)

Silica: Ultrasil VN3 (N$_2$SA: 175 m$^2$/g) manufactured by Evonik Degussa GmbH

Silane coupling agent: Si69 (bis(3-triethoxysilylpropyl)tetrasulfide) manufactured by Degussa

Wax: OZOACE 0355 manufactured by NIPPON SEIRO CO., LTD.

Antioxidant: Nocrac 6C (N-(1,3-dimethylbutyl)-N'-phenyl-p-phenylenediamine) manufactured by Ouchi Shinko Chemical Industrial Co., Ltd.

Stearic acid: stearic acid manufactured by NOF Corporation

Zinc oxide: Zinc Oxide JIS#3 manufactured by HAKUSUI TECH CO., LTD.

Sulfur: 5%-oil sulfur manufactured by Tsurumi Chemical Industry Co., Ltd.

Vulcanization accelerator NS: Nocceler NS (N-tert-butyl-2-benzothiazylsulfenamide) manufactured by Ouchi Shinko Chemical Industrial Co., Ltd.

(Examples and Comparative Examples)

In accordance with each of the blending formulas shown in Table 2, the chemicals other than the sulfur and the vulcanization accelerator were kneaded under a condition of 150°C for 5 minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes by using an open roll, to obtain an unvulcanized rubber composition.

The obtained unvulcanized rubber composition was press-vulcanized at 170°C for 20 minutes to obtain a vulcanized rubber sheet.

The obtained unvulcanized rubber composition was formed into the shape of a tread according to the basic pattern shown in Table 1, and attached together with other tire members to produce an unvulcanized tire, and the unvulcanized tire was press-vulcanized under a condition of 170°C for 10 minutes to obtain a test tire (size: 295/80R22.5 (for trucks and buses)).

The obtained test tires were evaluated as described below. The results are shown in Table 2.

<Fracture Properties>

According to JIS K 6251, "Rubber, vulcanized or thermoplastics-Determination of tensile stress-strain properties", a tensile test was carried out at a tensile speed of 500 mm/min by using a No. 3 dumbbell type test piece formed from each vulcanized rubber sheet. Breaking strength TB (MPa) and elongation at break EB (%) at 23°C±2°C were measured. TB×EB/2(MPa·%) was calculated and is indicated as an index with the value of Comparative Example 1 being regarded as 100. A higher index indicates that the fracture properties are better.

<Wear Resistance>

A volume loss amount of each vulcanized rubber sheet was measured using a LAT tester (Laboratory Abrasion and Skid Tester) under conditions of a load of 40 N, a speed of 20 km/h, and a slip angle of 5°. The ratio (%) of the volume loss amount of each composition to the volume loss amount of Comparative Example 2 is indicated as an index. A higher index indicates that the wear resistance is better.

<Uneven Wear Resistance>

The test tires were mounted to rims and attached to eight wheels of a 2-axle trailer towed by a 2DD vehicle, the vehicle was caused to run on a test course with an asphalt road surface, and the wear amount of each middle land portion was measured. For the wear amount, measurements were made at six locations in the tire circumferential direction on each of both edges of the right and left middle land portions, and the average of these measured values (n = 24) was regarded as the wear amount. Based on the average wear amount, evaluation of the following four grades was made: A: no uneven wear is observed; B: little uneven wear is observed; C: some uneven wear is observed; and D: considerable uneven wear is observed.

<Tire Total Life>

The above vehicle having the test tires attached thereto was caused to run for a total of 30,000 km on a general road, and then the groove depth of each main groove of the tires was measured. The groove depth is indicated as an index with the value of Comparative Example 1 being regarded as 100. A higher value indicates that the result is better.

[Table 1]

| | Pattern | | | | | | | | | |
|---|---|---|---|---|---|---|---|---|---|---|
| | 1 | 2 | 3 | 4 | 5 | 6 | 7 | 8 | 9 | 10 |
| Rib | 5 ribs | 5 ribs | 5 ribs | 5 ribs | 5 ribs | 5 ribs | 5 ribs | 5 ribs | 5 ribs | 5 ribs |
| Groove width W1 of main groove with respect to TW (%) | 5 | 5 | 5 | 5 | 5 | 5 | 5 | 5 | 5 | 5 |
| Wc:Wm:Ws | 1.00: 1.00: 1.40 | 1.00: 1.00: 1.16 | 1.00: 0.80: 1.40 | 1.00: 1.20: 1.40 | 1.00: 1.00: 1.30 | 1.00: 1.00: 1.60 | 1.00: 1.00: 1.40 | 1.00: 1.00: 1.40 | 1.00: 1.00: 1.40 | 1.00: 1.00: 1.40 |
| Lsm/Ws | 0.07 | 0.08 | 0.07 | 0.07 | 0.07 | 0.06 | 0.15 | 0.12 | 0.16 | 0.19 |
| Lst (mm)/H (mm) | 1.14 | 2.28 | 1.14 | 1.14 | 1.14 | 1.14 | 2.28 | 1.90 | 2.66 | 3.04 |

[Table 2]

| | Example | | | | | | | | | | | | Comparative Example | | | | | | | |
|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 1 | 2 | 3 | 4 | 5 | 6 | 7 | 8 |
| NR | 100 | 100 | 100 | 100 | 100 | 100 | 100 | 100 | 100 | 100 | 100 | 100 | 80 | 80 | 80 | 80 | 80 | 80 | 80 | 80 |
| BR | | | | | | | | | | | | | 20 | 20 | 20 | 20 | 20 | 20 | 20 | 20 |
| Carbon black 1 | 45 | 25 | 45 | 25 | 45 | 45 | 45 | 45 | 45 | 45 | | | 45 | 25 | | 45 | 25 | | | |
| Carbon black 2 | | 20 | | 20 | | | | | | | | | | 20 | 45 | | 20 | 45 | 45 | 45 |
| Carbon black 3 | | | | | | | | | | | 45 | | | | | | | | | |
| Carbon black 4 | | | | | | | | | | | | 45 | | | | | | | | |
| Silica | 6 | 10 | 6 | 10 | 6 | 6 | 6 | 6 | 6 | 6 | 6 | 6 | 6 | 6 | 6 | 10 | 10 | 10 | 10 | 10 |
| Silane coupling agent | 0.5 | 0.8 | 0.5 | 0.8 | 0.5 | 0.5 | 0.5 | 0.5 | 0.5 | 0.5 | 0.5 | 0.5 | 0.5 | 0.5 | 0.5 | 0.8 | 0.8 | 0.8 | 0.8 | 0.8 |
| Wax | 2 | 2 | 2 | 2 | 2 | 2 | 2 | 2 | 2 | 2 | 2 | 2 | 2 | 2 | 2 | 2 | 2 | 2 | 2 | 2 |
| Antioxidant | 3 | 3 | 3 | 3 | 3 | 3 | 3 | 3 | 3 | 3 | 3 | 3 | 3 | 3 | 3 | 3 | 3 | 3 | 3 | 3 |
| Stearic acid | 2 | 2 | 2 | 2 | 2 | 2 | 2 | 2 | 2 | 2 | 2 | 2 | 2 | 2 | 2 | 2 | 2 | 2 | 2 | 2 |
| Zinc oxide | 3 | 3 | 3 | 3 | 3 | 3 | 3 | 3 | 3 | 3 | 3 | 3 | 3 | 3 | 3 | 3 | 3 | 3 | 3 | 3 |
| Sulfur | 1.3 | 1 | 1.3 | 1 | 1.3 | 1.3 | 1.3 | 1.3 | 1.3 | 1.3 | 1.3 | 1.3 | 1.3 | 1.3 | 1.3 | 1 | 1 | 1 | 1 | 1 |
| Vulcanization accelerator N | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 |
| Fracture properties | 120 | 110 | 120 | 110 | 120 | 120 | 120 | 120 | 120 | 120 | 122 | 115 | 100 | 95 | 90 | 95 | 90 | 85 | 120 | 120 |
| Wear resistance | 100 | 95 | 100 | 95 | 100 | 100 | 100 | 100 | 100 | 100 | 102 | 98 | 105 | 100 | 95 | 105 | 100 | 95 | 100 | 100 |
| Tread pattern | Pattern 1 | Pattern 1 | Pattern 2 | Pattern 2 | Pattern 3 | Pattern 4 | Pattern 5 | Pattern 6 | Pattern 7 | Pattern 8 | Pattern 1 | Pattern 1 | Pattern 1 | Pattern 1 | Pattern 1 | Pattern 1 | Pattern 1 | Pattern 1 | Pattern 9 | Pattern 10 |
| Uneven wear resistance | A | A | B | B | B | B | B | B | C | B | A | B | D | D | D | D | D | D | D | D |
| Tire total life | 200 | 180 | 170 | 150 | 150 | 150 | 180 | 190 | 140 | 160 | 210 | 190 | 100 | 95 | 90 | 100 | 95 | 90 | 70 | 50 |

From Tables 1 and 2, the uneven wear resistance and the tire total life were significantly excellent in the Examples in each of which the heavy-duty tire includes a tread portion having predetermined crown main grooves, predetermined shoulder main grooves, a predetermined crown land portion, predetermined middle land portions, predetermined shoulder land portions, and predetermined shoulder lateral grooves, the above formulas (1) to (3) are satisfied, and the tread portion is formed from a rubber composition containing an isoprene-based rubber and predetermined carbon black in predetermined blending amounts.

**Claims**

1. A heavy-duty tire (1) comprising a tread portion (2) having a pair of crown main grooves (4) continuously extending in a tire circumferential direction and provided at both sides of a tire equator (C), and a pair of shoulder main grooves (5) provided between the crown main grooves (4) and tread edges (Te), wherein
   the tread portion (2) has one crown land portion (8) demarcated between the crown main grooves (4), a pair of middle land portions (7) demarcated by the crown main grooves (4) and the shoulder main grooves (5), and a pair of shoulder land portions (9) demarcated between the shoulder main grooves (5) and the tread edges (Te),
   at least one of the shoulder land portions (9) has shoulder lateral grooves (29) extending in a tire axial direction,
   **characterized in that**
   a width Wc in the tire axial direction (mm) of the crown land portion (8), a width Wm in the tire axial direction (mm) of each middle land portion (7), and a width Ws in the tire axial direction (mm) of each shoulder land portion (9) satisfy, in the normal state when the tire is mounted to the normal rim and inflated to the normal internal pressure and no load is applied to the tire, the following formula (1),
   a maximum length Lsm in the tire axial direction (mm) of the shoulder lateral grooves (29) and the width Ws in the tire axial direction (mm) of the shoulder land portion (9) satisfy, in said normal state, the following formula (2),
   a total length Lst in the tire axial direction (mm) of the shoulder lateral grooves (29) and a tire outer diameter H (mm) satisfy, in said normal state, the following formula (3), and
   the tread portion (2) is formed from a rubber composition containing a rubber component containing 90% by mass or greater of an isoprene-based rubber, and carbon black having an average particle diameter of not greater than 20 nm and/or a cetyltrimethylammonium bromide adsorption specific surface area of not less than 130 $m^2/g$,

$$Wc{:}Wm{:}Ws = 1.00{:}0.80 \text{ to } 1.20{:}1.10 \text{ to } 1.60 \quad (1)$$

$$0 < Lsm/Ws \leq 0.15 \quad (2)$$

$$0 < Lst/H \leq 2.30 \quad (3),$$

   wherein the total length Lst in the tire axial direction of the shoulder lateral grooves is the total length (sum) of the lengths in the tire axial direction of the respective shoulder lateral grooves provided in the tread surface, and is the sum of the lengths in the tire axial direction of the respective shoulder lateral grooves,
   wherein the tire outer diameter H is the maximum outer diameter in said normal state , and
   wherein the CTAB of the carbon black is a value measured according to JIS K6217-3: 2001.

2. The heavy-duty tire (1) according to claim 1, wherein the rubber composition contains 5 parts by mass or greater of the carbon black per 100 parts by mass of the rubber component.

**Patentansprüche**

1. Schwerlastreifen (1), umfassend einen Laufflächenabschnitt (2) mit einem Paar Kronenhauptrillen (4), die sich kontinuierlich in einer Reifenumfangsrichtung erstrecken und an beiden Seiten eines Reifenäquators (C) vorgesehen sind, und einem Paar Schulterhauptrillen (5), die zwischen den Kronenhauptrillen (4) und Laufflächenkanten (Te) vorgesehen sind, wobei

   der Laufflächenabschnitt (2) einen Kronenlandabschnitt (8), der zwischen den Kronenhauptrillen (4) abgegrenzt ist, ein Paar mittlere Landabschnitte (7), die durch die Kronenhauptrillen (4) und die Schulterhauptrillen (5) abgegrenzt sind, und ein Paar Schulterlandabschnitte (9), die zwischen den Schulterhauptrillen (5) und den Laufflächenkanten (Te) abgegrenzt sind, aufweist,

mindestens einer der Schulterlandabschnitte (9) Schulterquerrillen (29) aufweist, die sich in einer axialen Richtung des Reifens erstrecken, **dadurch gekennzeichnet, dass**

eine Breite Wc in der axialen Richtung des Reifens (mm) des Kronenlandabschnitts (8), eine Breite Wm in der axialen Richtung des Reifens (mm) jedes mittleren Landabschnitts (7) und eine Breite Ws in der axialen Richtung des Reifens (mm) jedes Schulterlandabschnitts (9) in dem normalen Zustand, wenn der Reifen auf die normale Felge aufgezogen und auf den normalen Innendruck aufgepumpt ist und keine Last auf den Reifen aufgebracht ist, die folgende Formel (1) erfüllen,

eine maximale Länge Lsm in der axialen Richtung des Reifens (mm) der Schulterquerrillen (29) und die Breite Ws in der axialen Richtung des Reifens (mm) des Schulterlandabschnitts (9) in dem normalen Zustand die folgende Formel (2) erfüllen,

eine Gesamtlänge Lst in der axialen Richtung des Reifens (mm) der Schulterquerrillen (29) und ein Reifenaußendurchmesser H (mm) in dem normalen Zustand die folgende Formel (3) erfüllen, und

der Laufflächenabschnitt (2) aus einer Kautschukzusammensetzung gebildet ist, die eine Kautschukkomponente enthält, die 90 Massen-% oder mehr eines Kautschuks auf Isoprenbasis enthält, und Ruß mit einem durchschnittlichen Teilchendurchmesser von nicht mehr als 20 nm und/oder einer spezifischen Cetyltrimethylammoniumbromid-Adsorptionsfläche von nicht weniger als 130 m$^2$/g,

$$Wc\!:\!Wm\!:\!Ws = 1{,}00\!:\!0{,}80 \text{ bis } 1{,}20\!:\!1{,}10 \text{ bis } 1{,}60 \qquad (1)$$

$$0 < Lsm/Ws \leq 0{,}15 \qquad (2)$$

$$0 < Lst/H \leq 2{,}30 \qquad (3),$$

wobei die Gesamtlänge Lst in der axialen Richtung des Reifens der Schulterquerrillen die Gesamtlänge (Summe) der Längen in der axialen Richtung des Reifens der jeweiligen Schulterquerrillen, die in der Laufflächenoberfläche vorgesehen sind, ist, und die Summe der Längen in der axialen Richtung des Reifens der jeweiligen Schulterquerrillen ist,

wobei der Reifenaußendurchmesser H der maximale Außendurchmesser in dem normalen Zustand ist, und wobei der CTAB des Rußes ein gemäß JIS K6217-3: 2001 gemessener Wert ist.

**2.** Schwerlastreifen (1) nach Anspruch 1, wobei die Kautschukzusammensetzung 5 Massenteile oder mehr des Rußes pro 100 Massenteile der Kautschukkomponente enthält.

## Revendications

**1.** Pneumatique pour poids lourd (1) comprenant une portion formant bande de roulement (2) ayant une paire de rainures principales de couronne (4) s'étendant en continu dans une direction circonférentielle du pneumatique et prévues au niveau des deux côtés d'un équateur de pneumatique (C), et une paire de rainures principales d'épaulement (5) prévues entre les rainures principales de couronne (4) et les bords de bande de roulement (Te), dans lequel la portion formant bande de roulement (2) a une portion en relief de couronne (8) délimitée entre les rainures principales de couronne (4), une paire de portions en relief médianes (7) délimitées par les rainures principales de couronne (4) et les rainures principales d'épaulement (5), et une paire de portions en relief d'épaulement (9) délimitées entre les rainures principales d'épaulement (5) et les bords de bande de roulement (Te),

au moins une des portions en relief d'épaulement (9) a des rainures latérales d'épaulement (29) s'étendant dans une direction axiale du pneumatique,

**caractérisé en ce que**

une largeur Wc dans la direction axiale du pneumatique (mm) de la portion en relief de couronne (8), une largeur Wm dans la direction axiale du pneumatique (mm) de chaque portion en relief médiane (7) et une largeur Ws dans la direction axiale du pneumatique (mm) de chaque portion en relief d'épaulement (9) satisfont, dans l'état normal dans lequel le pneumatique est monté sur la jante normale et est gonflé à la pression interne normale et dans lequel aucune charge n'est appliquée sur le pneumatique, la formule suivante (1),

une longueur maximum Lsm dans la direction axiale du pneumatique (mm) des rainures latérales d'épaulement (29) et la largeur Ws dans la direction axiale du pneumatique (mm) de la portion en relief d'épaulement (9) satisfont, dans ledit état normal, la formule suivante (2),

une longueur totale Lst dans la direction axiale du pneumatique (mm) des rainures latérales d'épaulement (29) et un diamètre extérieur du pneumatique H (mm) satisfont, dans ledit état normal, la formule suivante (3), et

la portion formant bande de roulement (2) est formée à partir d'une composition de caoutchouc contenant un composant de caoutchouc contenant 90 % en masse ou plus d'un caoutchouc à base d'isoprène, et du noir de charbon ayant un diamètre particulaire moyen qui n'est pas supérieur à 20 nm et/ou une aire de surface spécifique d'adsorption de bromure de cétyltriméthylammonium (CTAB) qui n'est pas inférieure à 130 $m^2/g$,

$$Wc:Wm:Ws = 1,00:0,80 \text{ à } 1,20:1,10 \text{ à } 1,60 \quad (1)$$

$$0 < Lsm/Ws \leq 0,15 \quad (2)$$

$$0 < Lst/H \leq 2,30 \quad (3),$$

dans lesquelles la longueur totale Lst dans la direction axiale du pneumatique des rainures latérales d'épaulement est la longueur totale (sum) des longueurs dans la direction axiale du pneumatique des rainures latérales d'épaulement respectives prévues dans la surface de bande de roulement, et est la somme des longueurs dans la direction axiale du pneumatique des rainures latérales d'épaulement respectives,

dans lesquelles le diamètre extérieur H du pneumatique est le diamètre extérieur maximum dans ledit état normal, et dans lequel le CTAB du noir de carbone est une valeur mesurée en accord avec la norme industrielle japonaise JIS K6217-3 : 2001.

2. Pneumatique pour poids lourd (1) selon la revendication 1, dans lequel la composition de caoutchouc contient 5 parts en masse ou plus de noir de carbone pour 100 parts en masse du composant de caoutchouc.

**FIG. 1**

# FIG. 2

**EP 3 632 702 B1**

**REFERENCES CITED IN THE DESCRIPTION**

**Patent documents cited in the description**

- JP 2011161988 A
- EP 2444257 A1
- JP 2000319539 A
- JP H8507555 PCT